# EUROPEAN PATENT SPECIFICATION

(11) **EP 3 268 919 B1**
(45) Date of publication and mention of the grant of the patent: **19.08.2020**
(21) Application number: 16706955.8
(22) Date of filing: 11.02.2016
(51) Int. Cl.: G06Q 30/02, G06Q 30/06, G06Q 30/08, H04W 28/24, G06Q 50/18

(54) **METHODS AND DEVICES TO ESTABLISH SERVICES BETWEEN SERVICE AND CONNECTIVITY STRATA**
VERFAHREN UND VORRICHTUNGEN ZUM AUFBAU VON DIENSTEN ZWISCHEN DIENST- UND KONNEKTIVITÄTSSCHICHTEN
PROCÉDÉS ET DISPOSITIFS POUR ÉTABLIR DES SERVICES ENTRE STRATES DE SERVICE ET DE CONNECTIVITÉ

(30) Priority: 10.03.2015 US 201562130943 P; 25.09.2015 US 201514866645
(43) Date of publication of application: 17.01.2018
(73) Proprietor: Qualcomm Incorporated, San Diego, CA 92121-1714 (US)
(72) Inventor: NASIELSKI, John Wallace, San Diego, California 92121-1714 (US); HORN, Gavin Bernard, San Diego, California 92121-1714 (US); LEE, Soo Bum, San Diego, California 92121-1714 (US); FACCIN, Stefano, San Diego, California 92121-1714 (US)
(74) Representative: Wegner, Hans
(86) International application number: PCT/US2016/017457
(87) International publication number: WO 2016/144474

(56) References cited:
- EP-A1- 1 331 785
- US-A1- 2004 073 502
- US-A1- 2008 235 379
- US-A1- 2010 049 859
- US-A1- 2011 113 146
- ROSENBERG DYNAMICSOFT H SCHULZRINNE COLUMBIA U J: "An Offer/Answer Model with the Session Description Protocol (SDP); rfc3264.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 June 2002 (2002-06-01), XP015009042, ISSN: 0000-0003

## Description

### CROSS-REFERENCE TO RELATED APPLICATIONS

### FIELD

One aspect generally relates to establishing services between a service stratum and a connectivity stratum. More particularly, aspects relate to methods and devices for a node of a service provider to automatically and/or dynamically establish a service to be hosted at a connectivity stratum and to configure the service based on parameters that are automatically and/or dynamically negotiated via messages exchanged between nodes of the service stratum and connectivity stratum.

### BACKGROUND

Today there are techniques such as wholesale services, mobile virtual network operator (MVNO), and mobile other licensed operator (MOLO) arrangements, where, for instance, a service provider may enter into a written contract with a connectivity provider or mobile network operator to obtain services. For example, the service provider may enter into the written contract to obtain bulk access to network services at wholesale rates.

Service providers at the service stratum and connectivity providers providing service at the connectivity stratum may negotiate written contracts between each other in person. To establish these contracts a service provider may go to a connectivity provider and may negotiate with the connectivity provider for the type of service the service provider desires. For example, the service provider may need a guaranteed minimum bit rate and guaranteed minimum bandwidth to support a certain application service.

Typically, the negotiations between parties take place in face-to-face meetings. It is not uncommon for the process of negotiating the contract to last for several months before the parties are ready to sign a deal. Then, before any device (e.g., a client device, user equipment) can access a network (e.g., a wireless network, a cellular network) to begin using the service, the connectivity provider must set-up back-end systems of its network to enforce the agreement set out in the written contract. Therefore, it is not uncommon for there to be a six-month or longer delay between a service provider's initial contact with a connectivity provider and implementation of the service with the connectivity provider's network. Furthermore, and for the same or similar reasons, it may be difficult to modify the service provided to the service provider as such modification may involve additional face-to-face meetings, exchanges of revised written contracts, and delays needed to obtain approval for the revised contract and/or other formal and/or informal acts.

Accordingly, a problem exists in that the time between when a service provider recognizes the need for a service, contracts with a connectivity provider to provide the service, and is able to offer the service to its customers via the connectivity provider's network is too long and the process is too complicated. A need exists to shorten the delay and to make changes automatically and dynamically. A need exists to provide flexibility and real-time updates to services.

US 2010/049859 A1 relates to providing network resources in a communication network to content providers, by establishing service level agreements (SLAs) between the content providers and the operator of said network (cf. par. [0001]). An SLA generally dictates that the network operator should provide the net work resources necessary for delivering content to end-users with the required and expected QoS (cf. par. [0005]). Parameters defined in an SLA are bandwidth, bitrate and geographical coverage needed for content delivery.

US 08/235379 A1 relates to methods and systems for negotiating resources in a communication system. One exemplary method includes transmitting, by a service manager, a request for a service, wherein the service request either explicitly provides, or implicitly refers to, a list of a plurality of service options for providing the service. Additionally, a resource manage can receive the transmission request from a service manager and process the request based upon either the explicitly transmitted list of service options or the reference to a list of service options.

### SUMMARY

The invention is defined by the subject matter of the independent claims. Advantageous enhancements are subject to the dependent claims.

According to one aspect, a first node operating at a service stratum may send a request to a second node. The request may be to establish a service hosted at a connectivity stratum. The first node may obtain a response including a first list of service parameters offered by the second node to establish the service. The first node may then send a second list of service parameters, selected from the first list of service parameters, to the second node. The service hosted at the connectivity stratum may be established based on the second list. According to some aspects, the second node operates at the connectivity stratum or an access stratum. The service may be at least one of a connectivity service, a content delivery service, a storage service, an analytic service, a billing service, mobile virtual network operator (MVNO) service, a voice service, and a text service.

According to one aspect, the first node may perform dynamic negotiation by repeating the obtaining and sending of one or more additional lists before sending the second list. In connection with dynamic negotiation, at least one term associated with at least one service parameter may be changed in each additional list until no terms are changed. The second list may be comprised of the additional list in which no terms are changed. No terms are changed when each term on a most recently obtained list corresponds to a predefined value established for each term on the most recently obtained list. The predefined value may be a value in a predefined range of values. The first list of service parameters and the second list of service parameters may include service parameters related to configuration of the service. In some aspects, the first list of service parameters includes a plurality of available terms for the service hosted at the connectivity stratum, and the second list of service parameters includes terms from the plurality of available terms for the service selected by the first node. According to one aspect, the terms include individual and/or collective costs associated with the service parameters.

The service may be a wireless service and the connectivity stratum may provide communications between the service stratum and user devices operating at an access stratum. The service may include a plurality of sub-services and each sub-service may include a separate set of service parameter requirements. According to some aspects, establishing the service may include one or more of establishing wireless access for one or more devices and performing session management for the one or more devices.

According to some aspects, dynamic negotiation may be performed automatically between a first processing circuit at the first node and a second processing circuit at the second node.

A device having a communication interface circuit adapted to communicate with a node and a processing circuit coupled to the communication interface circuit may be adapted to implement the above-described methods. The device may be a wireless device, the service may be a wireless service, and the connectivity stratum may provide communications between a service stratum and the wireless device operating at an access stratum. According to some aspects, the processing circuit may automatically perform dynamic negotiation with a second processing circuit at a remote node.

According to another aspect, a method, operational at a second node operating at a connectivity stratum may include obtaining a request from a first node to establish a service hosted at the connectivity stratum. The second node may send a response, including a first list of service parameters offered by the second node to establish the service. The second node may obtain from the first node, a second list of service parameters selected from the first list of service parameters. The service hosted at the connectivity stratum may be established by the second node based on the second list. According to some aspects, the first node may operate at a service stratum or an access stratum. According to some aspects, the service may be at least one of a connectivity service, a content delivery service, a storage service, an analytic service, a billing service, a mobile virtual network operator (MVNO) service, a voice service, and a text service.

The method may further include performing dynamic negotiation by repeating the obtaining and sending of one or more additional lists before sending the second list, wherein at least one term associated with at least one service parameter is changed in each additional list until no terms are changed, and wherein the second list is comprised of the additional list in which no terms are changed. No terms are changed when each term on a most recently obtained list corresponds to a predefined value established for each term on the most recently obtained list. The predefined value may be a value in a predefined range of values.

According to one aspect, the first list of service parameters and the second list of service parameters may include service parameters related to configuration of the service. The first list of service parameters may include a plurality of available terms for the service hosted at the connectivity stratum, and the second list of service parameters includes terms from the plurality of available terms for the service selected by the first node. The terms may include individual and/or collective costs associated with the service parameters.

According to some aspects, the service may be a wireless service and the connectivity stratum may provide communications between a service stratum and user devices operating at an access stratum. The service may include a plurality of sub-services and each sub-service may include a separate set of service parameter requirements.

According to some aspects, establishing the service may include one or more of establishing wireless access for one or more devices and performing session management for the one or more devices. Dynamic negotiation may be performed automatically between a first processing circuit operating in the connectivity stratum and a second processing circuit operating in a service stratum. The method may further include configuring services at the connectivity stratum based on a negotiated list of service parameters. Once a service is established, it may be removed. The method may therefore further include removing services at the connectivity stratum based on a negotiated list of service parameters.

A device having a communication interface circuit adapted to communicate with a first node and a processing circuit coupled to the communication interface circuit may be adapted to implement the above-described methods with respect to a second node. According to some aspects, the first node may be a node at a service stratum or an access stratum. The second node may be a node at a connectivity stratum. The device may be a server, the service may be a wireless service, and the connectivity stratum may provide communications between the service stratum and user devices operating at an access stratum.

According to some aspects, the processing circuit of the device may automatically perform dynamic negotiation with a second processing circuit at the service stratum. The device may configure connectivity services at the connectivity stratum based on a negotiated list of service parameters. Once a service is established, it may be removed. The device may therefore be adapted to remove connectivity services at the connectivity stratum based on a negotiated list of service parameters.

### DRAWINGS

FIG. 1 is a reference network architecture to enable devices to access services where functions are divided across different strata.
FIG. 2 illustrates a relationship between a service stratum and a connectivity stratum.
FIG. 3 illustrates use of the service connectivity protocol to establish services according to a first aspect.
FIG. 4 illustrates use of the service connectivity protocol to establish services according to a second aspect.
FIG. 5 is a block diagram illustrating an exemplary Service Manager adapted to support establishment of services between service and connectivity strata.
FIG. 6 is a block diagram illustrating an exemplary service connectivity protocol server adapted to support establishment of services between service and connectivity strata.
FIG. 7 is flow diagram of an exemplary method of establishing a service hosted at a connectivity stratum.
FIG. 8 is flow diagram of an exemplary method of establishing a service hosted at a connectivity stratum.
FIG. 9 is flow diagram of an exemplary method of establishing a service hosted at a connectivity stratum.
FIG. 10 is flow diagram of an exemplary method of establishing a service hosted at a connectivity stratum.
FIG. 11 is flow diagram of an exemplary method of establishing a service hosted at a connectivity stratum.
FIG. 12 is flow diagram of an exemplary method of establishing a service hosted at a connectivity stratum.
FIG. 13 is flow diagram of an exemplary method of establishing a service hosted at a connectivity stratum.

### DETAILED DESCRIPTION

In the following description, reference is made to the accompanying drawings in which is shown, by way of illustration, specific embodiments in which the disclosure may be practiced. The embodiments are intended to describe aspects of the disclosure in sufficient detail to enable those skilled in the art to practice the invention. Other embodiments may be utilized and changes may be made to the disclosed embodiments without departing from the scope of the disclosure. The following detailed description is not to be taken in a limiting sense, and the scope of the present invention is defined only by the appended claims.

The term "device" may be used herein to refer to a wireless device, mobile device, mobile phone, mobile communication device, mobile computing device, digital tablet, smart phone, among other devices. The term "cloud" may be used herein to refer to a domain, group, etc., of devices providing certain functionality/resources such as computational, networking, storage, and content delivery. The terms "layer(s)", "strata", and "stratum" may be interchangeably used to refer to segments of a communication network that individually play generally distinct roles, but are not necessarily considered layers of a protocol stack, and that together provide the functions and services needed for communication between endpoint users and services, such as between a device and a service offered by a service provider. The term "obtain" may be used herein to mean acquire locally, for example by deriving at a source, or acquire from a remote node, for example by receiving a message from a remote node. The term "node" may be used herein to refer to a function, module, circuit, etc., which may be an end point or a redistribution point for data, signals, messages, transmissions, etc., and which in general may be a function, module, circuit, etc. that is programmed, designed, or engineered to obtain, receive, process, send, and/or transmit data, signals, messages, transmissions, etc., from and/or to other nodes.

### Overview

The features described herein generally relate to methods and devices that dynamically and automatically negotiate parameters and terms associated with one or more services automatically obtained by a node in a service stratum, from a node in a connectivity stratum. Services may include, for example, connectivity services, content delivery services, storage services, analytic services, billing services, MVNO services, and applications such as voice services and text services.

One or more client devices (e.g., mobile terminals, machine-to-machine devices, user equipment) may use the services after automatic orchestration of the services by the node in the connectivity stratum.

According to aspects described herein, the methods may be useful when there is no agreement *a priori* between a service provider (e.g., a provider of streaming video or e-books) and a connectivity provider (e.g., provider of electrical/electronic/optical communication between a device in an access stratum and a server in a service stratum, a network provider, a mobile network operator). The methods may not be related to, for example, routing of packets through a network. Instead, the methods may be related to a first step of establishing a set of parameters, and terms related to those parameters, that may permit devices (e.g., client devices, UEs), which have subscriptions to a service offered by the service provider, to access the service via a network of the connectivity provider. The methods involve establishing the set of parameters in a dynamic way, for example, through negotiation automatically performed by processing circuits of a node associated with the service provider (in the service stratum) and another node associated with the connectivity provider (in the connectivity stratum). The negotiations may be transparent to devices (e.g., client devices, UEs) in the access stratum.

According to one aspect, a first node operating at a service stratum may send a request to a second node operating at a connectivity stratum. The request may be a request to establish a service hosted at the connectivity stratum. The second node may respond with a first list of service parameters (e.g., quality of service (QoS), maximum bit rate) offered by the second node to establish the service. The service parameters may each be associated with one or more terms (e.g., amounts of bandwidth, costs associated with each given amount of bandwidth). The first node may select a second list of service parameters from the first list of service parameters. The second list may include the parameters and terms that the first node selected from the first list. The first node may send the second list back to the second node. A dynamic negotiation between the two nodes may take place. For example, each node, in turn, may obtain a list from its counterpart node, evaluate the list (e.g., evaluate the parameters and terms), modify the list if necessary (e.g., to secure parameters and terms that are within a range of predetermined options or values authorized to the node) and send the list back to its counterpart node. According to one aspect, once modification of the list is not required, that is, when negotiations are successful, the node in the connectivity stratum may establish (e.g., orchestrate) the service.

In the same or similar way, the first and second nodes can automatically perform updates (e.g., changes to parameters and terms) of previously established services, and removal or ceasing of services.

### Exemplary Operating Environment

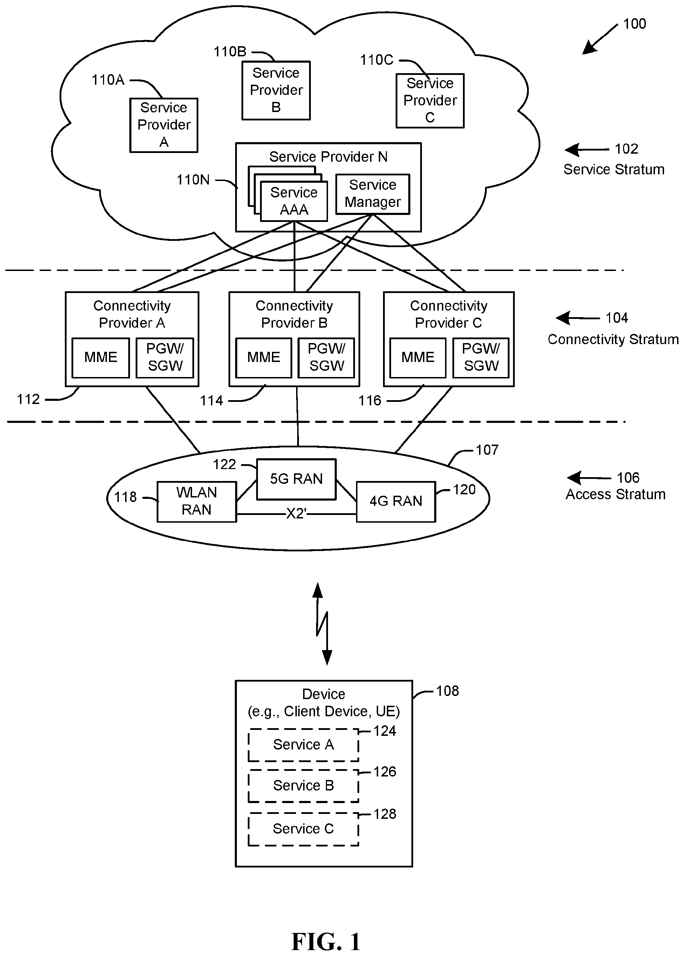

FIG. 1 is a reference wireless network architecture 100 that enables devices to access services from service providers. The functions of the network are divided across different strata. The wireless network architecture 100 may include three strata: a service stratum 102, a connectivity stratum 104, and an access stratum 106. FIG. 1 illustrates the pairwise relationships, features, and protocols between the various strata 102, 104, 106 and a device 108. The primary functions of each stratum are now described.

The service stratum 102 may host credentials for devices/subscribers. It may provide one or more services and/or may host application server(s) for services. It may maintain a billing relationship with the connectivity stratum 104 (and optionally devices (e.g., client devices, UE devices, device 108) and/or subscribers that gain access to a wireless network via the access stratum 106).

The connectivity stratum 104 may provide control signaling to facilitate mobility management, authentication, and/or packet streaming to/from devices (e.g., client devices, UE devices, device 108). The connectivity stratum 104 may host sessions for devices to use services offered by service providers in the service stratum 102. The connectivity stratum 104 may enforce subscription limits defined by the service stratum 102. In the exemplary illustration of FIG. 1, mobility management entities (MMEs), packet gateways (PGWs) and service gateways (SGWs) are examples of elements of the connectivity stratum 104. However, the connectivity stratum 104 is limited to these exemplary elements as additional and alternative elements are acceptable.

The access stratum 106 may host one or more types of radio access network (RAN) 107. The types of RAN 107 may be used by devices (e.g., device 108) to access the networks of the connectivity stratum 104 and beyond. In FIG. 1, three types of RAN are depicted. Wireless local access network RAN (WLAN RAN) 118, 4G RAN 120, and 5G RAN 122. An X2' reference point is depicted as an interface between the three exemplary types of RAN 107. These types of RAN and the X2' reference point are understood by those of skill in the art. The types of RAN 107, and the reference point through which they may interface, are not limited to those shown in FIG. 1. The access stratum 106 may also enforce subscription limits defined by the connectivity stratum 104.

A device 108 may host credentials for the service stratum 102 and may use services (e.g., Service A 124, Service B 126, Service C 128) hosted by service providers in the service stratum 102. The device 108 may wirelessly access the services of the service providers via the access stratum 106 and the connectivity stratum 104. The access stratum 106 and the connectivity stratum 104 may also host some services.

By way of example, service providers may include Service Provider A 110A (e.g., an automobile manufacturer) and Service Provider B 110B (e.g., on-line seller of consumer products and/or user services). Service Provider A may provide a service to automobiles via wireless networks. Service Provider B 110B may provide services to tablets that may enable users to download and make use of multiple other services offered by Service Provider B 110B.

In one aspect, the methods and apparatus described herein may relate to how a node of a service provider (e.g., Service Provider A 110A, Service Provider B 110B) in the service stratum 102 and a node of a connectivity provider (e.g., of the one or more connectivity providers 112, 114, 116) in the connectivity stratum 104 automatically and dynamically negotiate to establish a service. As stated, a service may include, for example, a connectivity service, a content delivery service, a storage service, an analytic service, a billing service, an MVNO service, and applications such as a voice service and a text service. According to some aspects, a service may include a plurality of sub-services and each sub-service may include a separate set of service parameter requirements.

A new protocol, referred to herein as the service connectivity protocol (SCP) may addresses a problem of how to automatically and dynamically negotiate to establish a service. The processes described herein may first occur before a given service is pushed down to a device, and before any device attempts to use the given service.

After a first service is established, the processes may be used to dynamically and automatically add a new service, update the first service or another established service, and/or remove the first service or another established service. The processes described herein may reflect steps to help ensure that a given connectivity provider's back-end systems are ready to provide the services when needed by a device.

### Exemplary Process

By way of example, assume that Service Provider A 110A is a service provider that has designed its vehicles to include diagnostic features, telematics, global positioning satellite (GPS) assistance, and other features that require access to servers operated by Service Provider A 110A to function. Access to the servers operated by Service Provider A 110A may be obtained through the Internet. Service Provider A 110A may not want to force consumers to obtain separate wireless network access accounts for each vehicle the consumer purchases and/or to be forced to pay a separate monthly fee to a connectivity provider for the access (by the vehicle) to the Internet via one or more wireless networks. Service Provider A 110A may want to provide the features to the consumer so that the features work as soon as a vehicle is ready for sale, or after sale (e.g., during a free trial period or based on a subscription purchased through Service Provider A 110A).

Consequently, Service Provider A 110A may reach an agreement with one or more connectivity providers 112, 114, 116 to provide for Internet connectivity for its vehicles via the wireless networks of the one or more connectivity providers 112, 114, 116. The back-ends of each of the one or more connectivity providers 112, 114, 116 should be ready to enforce the features negotiated and agreed upon between Service Provider A 110A and the one or more connectivity providers 112, 114, 116 operating the one or more core networks before a vehicle is purchased.

Similarly, Service Provider B 110B may desire to negotiate deals with connectivity providers so that, for example, an e-reader sold by Service Provider B 110B has access to the Internet as soon as the e-reader comes out of its box. Instant access to the Internet via a wireless cellular network would mean that the consumer that purchased the e-reader would not need to wait to connect to the Internet (e.g., via a subscription to a cellular or Wi-Fi service that the consumer separately acquired). The pre-arranged and instant access may permit the consumer that purchased the e-reader to immediately purchase and/or download e-books as soon as the consumer removes the e-reader from its box.

For illustrative and descriptive purposes, the new SCP protocol is presented by way of the exemplary aspects described herein.

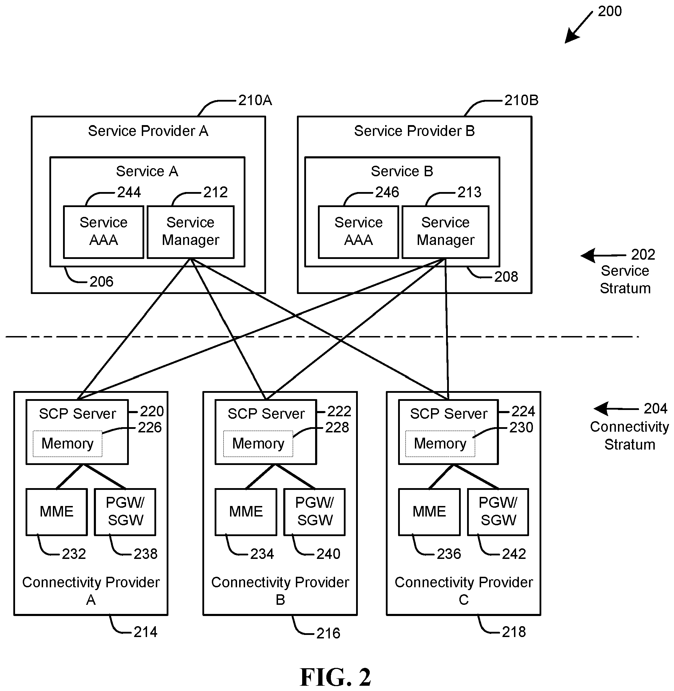

FIG. 2 illustrates a relationship 200 between the service stratum 202 and the connectivity stratum 204. FIG. 2 depicts two service providers 210A, 210B. Each service provider 210A, 210B is depicted as being associated with one service. Service Provider A 210A may be associated with Service A 206. Service Provider B 210B may be associated with Service B 208. This depiction is illustrative and not limiting; a service provider 210A, 210B may offer more than one service. To avoid cluttering the drawing, in the exemplary illustration of FIG. 2, each service provider offers one service.

In the service stratum 202, each service may have a service manager. As used herein, the service manager may be a circuit/function/module. Accordingly, Service Provider A 210A may be associated with a first Service Manger 212. Service Provider B 210B may be associated with a second Service Manager 213. The first Service Manager 212 and second Service Manager 213 may be responsible for establishing, monitoring, updating, and/or closing services with connectivity providers 214, 216, 218. Also in the service stratum 202, each service 206, 208 may have a service authentication, authorization and accounting (S-AAA or Service AAA) 244, 246 server. The illustration is not limiting, for instance, each service provider may host his or her own Service AAAs 244, 246 or the Service AAA function may be obtained from the connectivity provider.

The Service Manager 212, 213 may communicate with service connectivity protocol servers (SCP Servers 220, 222, 224) in the connectivity stratum 204 via the service connectivity protocol (SCP).

Each connectivity provider 214, 216, 218 may have at least one SCP Server 220, 222, 224. Each SCP Server 220, 222, 224 may have stored within its respective memory circuit/module/function 226, 228, 230 the local connectivity services and configurations of its respective connectivity provider 214, 216, 218. SCP Servers 220, 222, 224 may be considered as part of a core network of a connectivity provider 214, 216, 218. Also depicted in the core networks of each connectivity provider 214, 216, 218 are at least one mobility management entity (MME) 232, 234, 236, and at least one packet gateway and service gateway, illustrated collectively as PGW/SGW servers 238, 240, 242. The illustrated use of MMEs 232, 234, 236 and PGW/SGW servers 238, 240, 242 in the core networks of connectivity providers 214, 216, 218 is illustrative and not limiting.

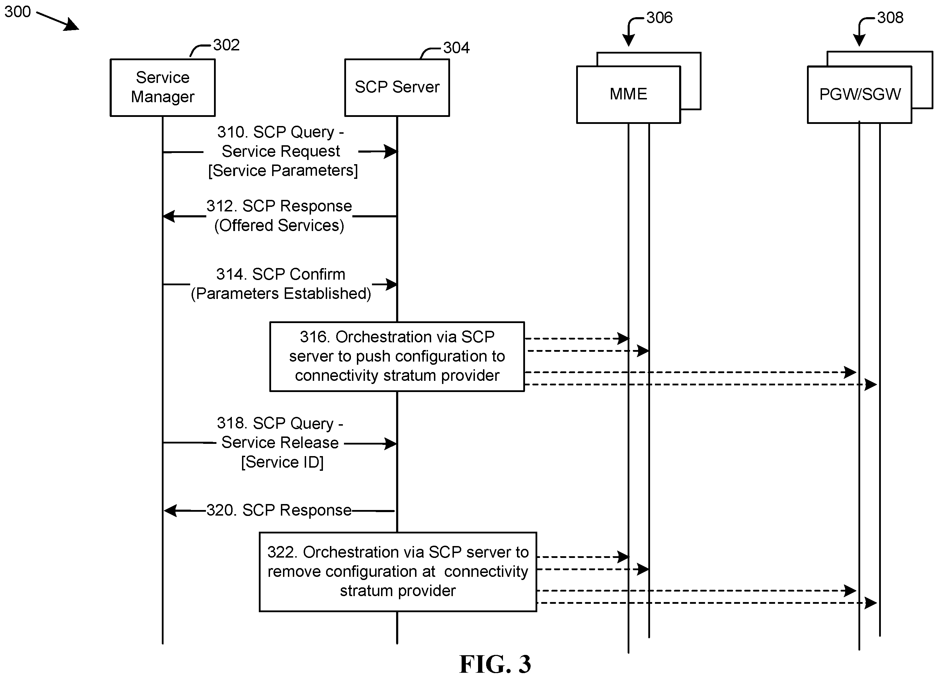

FIG. 3 is diagram illustrating an exemplary call flow 300 illustrating a use of the service connectivity protocol to establish services. In FIG. 3, a process using a 3-way handshake is illustrated. Depicted in FIG. 3 are the following nodes: Service Manager 302, SCP Server 304, a plurality of MMEs 306, and a plurality of PGW/SGWs 308. The illustrated use of MMEs 306 and PGW/SGWs 308 in the diagram of FIG. 3 is illustrative and not limiting.

As illustrated in FIG. 3, the Service Manager 302 node may contact an SCP Server 304 node by sending an SCP element referred to herein as an "SCP Query - Service Request" 310. The Service Manager 302 may discover the SCP Server 304 of a connectivity provider out of band, for example, using a domain name system (DNS) or discovery techniques known to those of skill in the art. In the SCP Query - Service Request, the Service Manager 302 may provide a list of desired service parameters to the SCP Server 304. Providing the list of parameters may be optional. The list of parameters may include, for example, time (e.g., a period of time for which the service is desired), geographical location (e.g., geographical locations where the service may or may not be accessed), quality of service (QoS) (e.g., minimum and/or maximum levels of QoS for the service), and/or number of users. Additional/alternative parameters are presented in Table 1, below.

The SCP Query-Service Request may also include a bid or propose a payment for services if a list of desired service parameters is provided to the SCP Server 304. The bid or proposed payment may be included with the SCP Query - Service Request or may be understood from data associated with the SCP Query - Service Request and/or data associated with the list of desired service parameters, if included. The SCP Server 304 may consider the bid or proposed payment and may adjust any predetermined pricing that it typically associates with the service. The exchange of bids or proposed pricing may be considered as part of a dynamic negotiation process. Initial bids or proposed pricing may come from either the Service Manager 302 or the SCP Server 304.

The SCP Server 304 may respond by sending an SCP element referred to herein as an "SCP Response" 312. The SCP Response 312 may include a list of offered services. The offered services may or may not correspond to the desired services. Additional dynamic negotiation may ensue (not shown).

The Service Manager 302 may accept the offered services (e.g., determine that the parameters, and the terms associated with the parameters, are authorized or fall within a predetermined range). The Service Manager 302 may send an SCP element referred to herein as an "SCP Confirm" 314. The SCP Confirm 314 may be sent from the Service Manager 302 to the SCP Server 304. The SCP Confirm 314 may represent the successful conclusion of automatic and/or dynamic negotiation between the Service Manager 302 and the SCP Server 304.

The SCP Confirm 314 may represent that the Service Manager 302 has accepted the parameters to be used, and the terms associated with the parameters to be used, to establish the service. In one example, the list and/or any data associated with the SCP Response 312, may provide the parameters and terms to be evaluated by the Service Manager 302 during dynamic negotiation. The list and/or any data associated with the SCP Response 312 may provide the basis upon which a determination is made to send of the SCP Confirm 314. Data that may serve as a confirmation number or service identifier (e.g., a Service ID) may be included with the SCP Response 312 and/or the SCP Confirm 314. The preceding type of negotiation may be known as a 3-way handshake.

At the conclusion of a successful negotiation process between nodes, the SCP Server 304 may orchestrate the agreed upon service by, for example, pushing 316 the configuration parameters to elements of the connectivity stratum (e.g., MME, PGW/SGW) that are used for orchestration of the connectivity. The parameters may be used, for example, to establish flow filters and packet forwarding rules, etc. The orchestration to push the configuration parameters is represented by broken line arrows between the SCP Server 304 and the MMEs 306 and PGW/SGWs 308 of the connectivity provider associated with the SCP Server 304. The MMEs 306 and PGW/SGWs 308 are examples of elements of the connectivity stratum. Alternative elements are acceptable.

The Service Manager 302 may, sometime later, determine to end the relationship with a given connectivity provider for a given service. This may be accomplished by sending an SCP element referred to herein as an "SCP Query - Service Release" 318 to the SCP Server 304. The SCP Query - Service Release 318 may include a "Service ID" to identify a given service from among several services that the SCP Server 304 may be tracking. Alternatively, the SCP Server 304 sending an appropriate message to the Service Manager 302 may initiate the end of the relationship.

The SCP Server 304 may then send an SCP Response 320 to confirm the ending of the service. To end of the service, the SCP Server 304 may orchestrate to remove 322 the configuration previously pushed to the elements of the connectivity stratum that may use the configuration information. Alternatively, the SCP Server 304 may first remove/withdraw/cancel the configuration and then confirm the end of the service to the Service Manager 302. The orchestration to remove/withdraw/cancel the configuration is represented by broken line arrows between the SCP Server 304 and the MMEs 306 and PGW/SGWs 308 of the connectivity provider associated with the SCP Server 304. The MMEs 306 and PGW/SGWs 308 are examples of elements of the connectivity stratum. Alternative elements are acceptable.

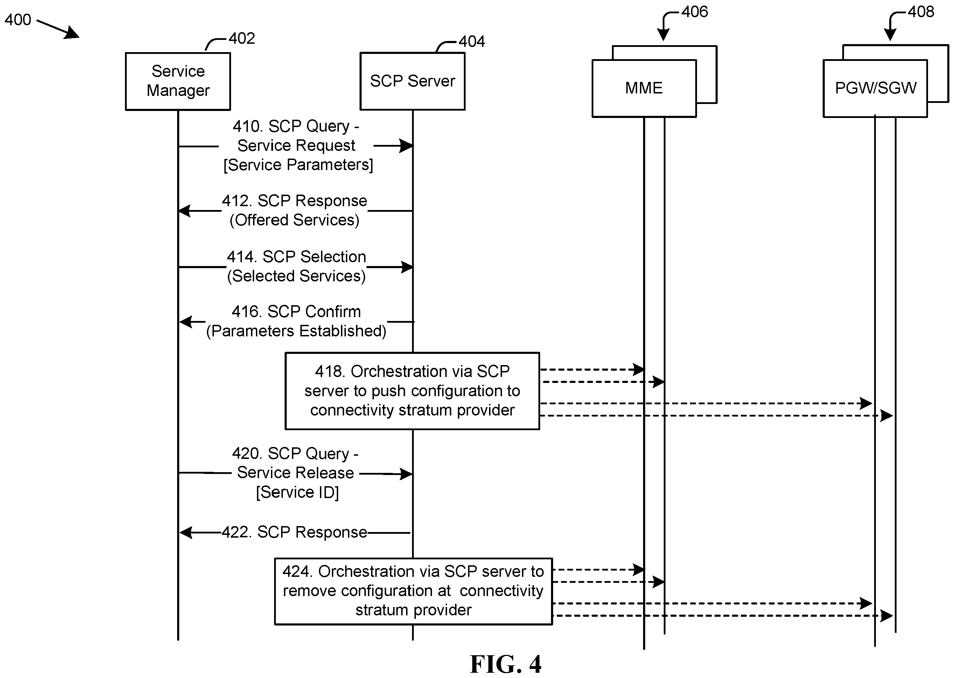

FIG. 4 is diagram illustrating another exemplary call flow 400 illustrating a use of the service connectivity protocol to establish services. Depicted in FIG. 4 are the following nodes: Service Manager 402, SCP Server 404, a plurality of MMEs 406, and a plurality of PGW/SGWs 408. The illustrated use of MMEs 406 and PGW/SGWs 408 in the diagram of FIG. 4 is illustrative and not limiting.

In FIG. 4, as an alternative to the 3-way handshake of FIG. 3, the negotiation between the Service Manager 402 node and the SCP Server 404 node may be accomplished using a 4-way handshake. In the 4-way handshake, the Service Manager 402 may send an SCP Server 404 an SCP Query - Service Request 410. In this methodology, the SCP Query - Service Request 410 may or may not include a list of desired service parameters. The SCP Server 404 may reply by sending an SCP Response 412. The SCP Response 412 may include a list of offered services.

The Service Manager 402 may respond to the SCP Response 412 by sending an SCP element referred to herein as an "SCP Selection" 414. The SCP Selection 414 may include a selection of none, any, or all of the services from the list of offered services included with the SCP Response 412. The SCP Server 404 may respond to the SCP Selection 414 with an SCP element referred to herein as an "SCP Confirm" 416. The SCP Confirm 416 may represent the successful conclusion of automatic and/or dynamic negotiation between the Service Manager 402 and the SCP Server 404.

The SCP Confirm 416 may represent that the SCP Server 404 has accepted the parameters to be used, and the terms associated with the parameters to be used, to establish the service. In one example, the list and/or any data associated with the SCP Selection 414 may provide the parameters terms to be evaluated by the SCP Server 404 during dynamic negotiation. The list and/or any data associated with the SCP Selection 414 may provide the basis upon which a determination is made to send of the SCP Confirm 416. Data that may serve as a confirmation number or service identifier (e.g., a Service ID) may be included with the SCP Response 412, the SCP Selection 414, and/or the SCP Confirm 416. The preceding type of negotiation may be known as a 4-way handshake.

Negotiation using, for example, 3-way or 4-way handshaking, may begin at any time, and the process of negotiation may be used to re-negotiate a previously agreed upon service (e.g., agreed upon parameters and terms). Additionally, negotiation may be a dynamic real-time process between nodes. For example, a Service Manager 302, 402 or a SCP Server 304, 404 may propose an offer (including, for example, a list of services and a bid or proposed price for the services) to its counterpart node (e.g., node to node); the counterpart node may reject the offer and may either wait for another offer or provide a counter-offer. In this way, the nodes are able to dynamically converge on one agreed upon list of parameters and terms for a service.

At the conclusion of a successful negotiation process between nodes, the SCP Server 404 may orchestrate the negotiated service by, for example, pushing 418 the configuration parameters to elements of the connectivity stratum (e.g., MME, PGW/SGW) that are used for orchestration of the connectivity. The parameters may be used, for example, to establish flow filters and packet forwarding rules, etc. The orchestration to push the configuration parameters is represented by broken line arrows between the SCP Server 404 and the MMEs 406 and PGW/SGWs 408 of the connectivity provider associated with the SCP Server 404. The MMEs 406 and PGW/SGWs 408 are examples of elements of the connectivity stratum. Alternative elements are acceptable.

The Service Manager 402 may, sometime later, determine to end the relationship with a given connectivity provider for a given service. This may be accomplished by sending an SCP element referred to herein as an "SCP Query - Service Release" 420 to the SCP Server 404. The SCP Query - Service Release 420 may include a "Service ID" to identify a given service from among several services that the SCP Server 404 may be tracking. Alternatively, the SCP Server 404 sending an appropriate message to the Service Manager 402 may initiate the end of the relationship.

The SCP Server 404 may then send an SCP Response 422 to confirm the ending of the service. In connection with ending the service, the SCP Server 404 may orchestrate to remove 424 the configuration information previously pushed to the elements of the connectivity stratum that may use the configuration information. Alternatively, the SCP Server 404 may first remove/withdraw/cancel the configuration and then confirm the end of the service to the Service Manager 402. The orchestration to remove/withdraw/cancel the configuration is represented by broken line arrows between the SCP Server 404 and the MMEs 406 and PGW/SGWs 408 of the connectivity provider associated with the SCP Server 404. The MMEs 406 and PGW/SGWs 408 are examples of elements of the connectivity stratum. Alternative elements are acceptable.

Additionally, in connection with ending a service between the service stratum and the connectivity stratum, the connectivity stratum may need to handle devices (e.g., client devices, UEs) that try to connect with the connectivity stratum after the service ends. This could waste resources of the connectivity stratum. A desire to avoid wasting resources may provide an incentive for the connectivity stratum to redirect any devices that try to connect after the service between the service stratum and the connectivity stratum ends.

### Service Parameters

One enabler for service connectivity protocol (SCP) may be a facility or mechanism to abstract services that are desired by service providers and offered by connectivity providers. By abstraction, each stratum may parameterize the capabilities needed to enable service providers and connectivity providers to particularly specify services that are needed so the service can be described in the service parameters sent from and/or obtained by the Service Manager.

By way of example, it may be desirable to have service parameters define the requirements for a given service in terms of connectivity and access strata performance and capabilities. It may also be desirable to have the service stratum provide the service parameters to the connectivity stratum when the service is negotiated with the connectivity stratum. In this way, the service stratum may have had an opportunity to, for example, develop a list of any possible combinations of parameters and terms that would enable its service to function in a way found acceptable by its clients (e.g., users of client devices). It may also be desirable to have the connectivity and access strata configure the service based on the service parameters terms and their respective stratum capabilities. Table 1, below provides a list of exemplary service parameters by stratum.

**TABLE 1**

| Stratum | Example Service Parameters |
|---|---|
| Service | Cloud based computational requirements, cloud based content requirements, cloud based storage requirements, processing requirements, IP Multimedia Subsystem (IMS), voice, text, billing, enhanced 9-1-1 (E911), short message service (SMS), etc. |
| Connectivity | Quality of service (QoS) (per flow, per bearer, etc.), Internet Protocol versions 4 or 6 (IPv4/IPv6), public/network access translation (NAT) options for IPv4, storage and content delivery functions, access network discovery and selection function (ANDSF) policies, time and usage based limits, security capabilities (e.g., authentication methods, credential types, secure storage) |
| Access | Radio access technology (RAT) supported, coverage limits, device identities, device capabilities, storage and content delivery functions, delivery method, e.g., unicast/broadcast/multicast |

In one aspect, it may be understood that the services provided by each stratum depend on the capabilities of the partners (i.e., the service provider and the connectivity provider). For example, in some cases a connectivity stratum may supply content delivery network or content distribution network (CDN) services, in other cases the CDN may belong to the service stratum (e.g., Netflix.) As understood by those of skill in the art, a CDN may be described as a distributed system of servers used to provide content to end-users with higher availability and higher performance than would be possible, for example, if the same content was provided by only the servers of the producer of the content.

### Offered Services

In addition to the enabling of a service based on the service parameters exemplified above, a system according to aspects described herein may offer different options for how the services may be offered. Examples of different options may include, but are not limited to, options related to costs, as described below.

A first cost option, according to one aspect, may be the option of prepaid services. According to this exemplary aspect, the parties to the services may establish a reserve capacity for the services to, for example, guarantee the delivery of the services in a given region for a given number of devices. The capacity may also be fixed to limit the number of devices or traffic for the devices in a region. Unused capacity may potentially go to waste or it may, for example, be rolled-over to a later period.

A second cost option, according to one aspect, may be on-demand services. According to this exemplary aspect, capacity may be added as devices access/make use of the negotiated service. An on-demand service may be more or less expensive than a prepaid service based on the number of devices using the service.

A third cost option, according to one aspect, may be bulk-pricing levels. According to this exemplary aspect, capacity costs per user/service for data may be reduced as more capacity is used.

Additionally, or alternatively, instead of paid prioritization, operators may use other levers such as time/congestion pricing and/or there may be limits imposed on fixed broadband (e.g., metered pricing, etc.). These and other options are available for cost management.

According to yet another aspect, monitoring services (that may be in addition to any already provided) may be offered to allow the service stratum to track usage of the service at the connectivity and access strata. In this way the service stratum could be empowered to measure/observe, for example, where a given service is being accessed and how much of the service is being used in real-time.

### Exemplary Service Manager and SCP Server

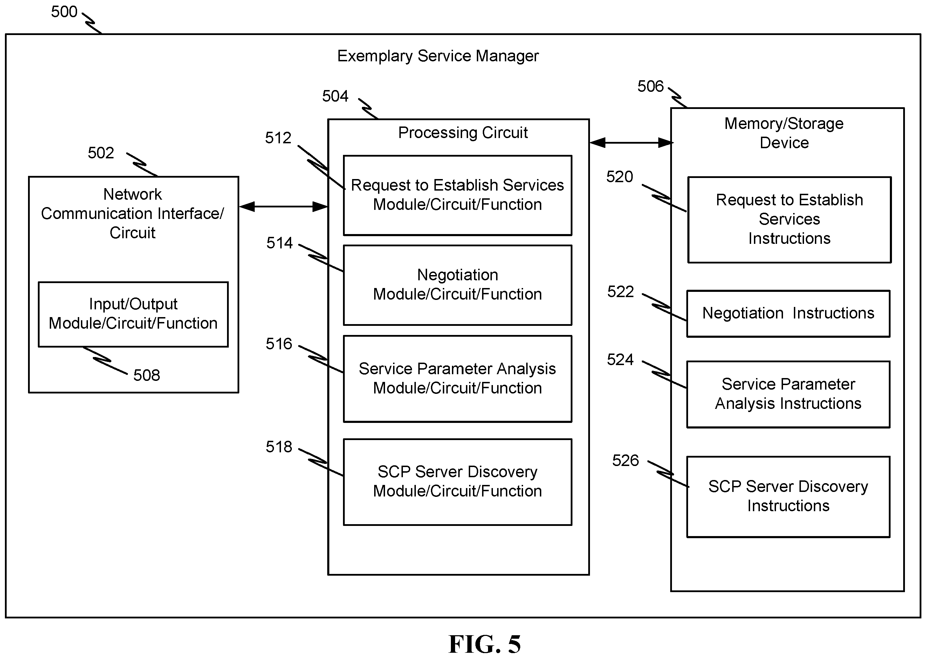

FIG. 5 is a block diagram illustrating an exemplary Service Manager 500 (e.g., a first node) adapted to support establishment of services between service and connectivity strata. In one example, the exemplary Service Manager 500 may include a network communication interface circuit 502, a processing circuit 504 coupled to the network communication interface circuit 502, and memory/storage device 506 coupled to the processing circuit 504. This list is non-limiting.

The network communication interface circuit 502 may include an input/output module/circuit/function 508 for communication with an SCP server (e.g., 304, FIG. 3) (e.g., a second node).

The processing circuit 504 may include or implement one or more processors, application specific processors, hardware and/or software modules, etc., that are adapted to support establishment of services between service and connectivity strata. For example, a request to establish services module/circuit/function 512 may be adapted to generate requests, which may be sent to a node at a connectivity stratum. The services may be hosted at the connectivity stratum. By way of another example, a module/circuit/function 514 to perform negotiations, may be adapted to perform negotiations, by way of, for example, causing the processing circuit 504 of the exemplary Service Manager 500 to repeatedly send SCP Query - Service Requests if a service parameter analysis module/circuit/function 516 determines that the list of services being offered by the node at the connectivity stratum is not acceptable (e.g., the parameters are not within predetermined acceptable limits). By way of yet another example, a module/circuit/function 518 to discover SCP servers may be adapted to discover SCP servers out of band by use, for example, of a domain name system (DNS). This list is non-limiting.

The memory/storage device 506 may be adapted to include request to establish services instructions 520, negotiation instructions 522, service parameter analysis instructions 524, and SCP Server discovery instructions 526. This list is non-limiting.

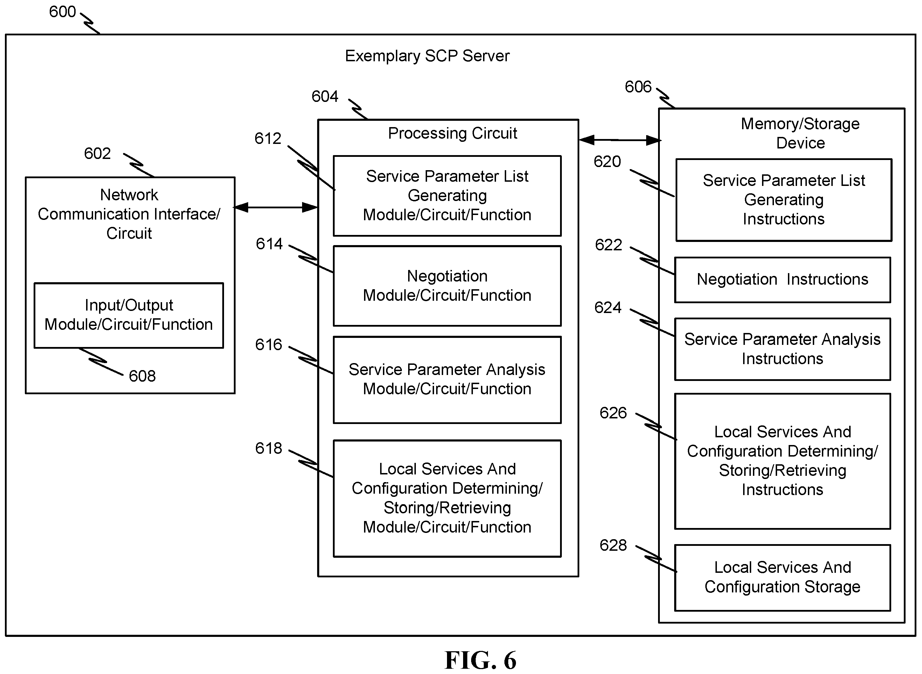

FIG. 6 is a block diagram illustrating an exemplary SCP server 600 (e.g., 304, FIG. 3) adapted to support establishment of services between service and connectivity strata. In one example, the exemplary SCP server 600 may include a network communication interface circuit 602, a processing circuit 604 coupled to the network communication interface circuit 602, and memory/storage device 606 coupled to the processing circuit 604. This list is non-limiting.

The network communication interface circuit 602 may include an input/output module/circuit/function 608 for communication with a Service Manager.

The processing circuit 604 may include or implement one or more processors, application specific processors, hardware and/or software modules, etc., that are adapted to support establishment of services between service and connectivity strata. For example, a module/circuit/function 612 to generate a service parameter list may be adapted to generate lists of services, which may be sent to a Service Manager, in response, for example, to requests to establish connectivity for a service hosted at the connectivity stratum. By way of another example, a module/circuit/function 614 to perform negotiations may be adapted to perform negotiations by way of, for example, causing the processing circuit 604 of the exemplary SCP server 600 to repeatedly generate lists of services if the service parameter analysis module/circuit/function 616 determines that the Service Manager has not accepted a prior list of services offered by the node at the connectivity stratum, or if the service parameter analysis module/circuit/function 616 determines that a list of services obtained from the Service Manager is not acceptable (e.g., the parameters are not within a predefined range of acceptable values). By way of yet another example, a local services and configuration determining/storing/retrieving module/circuit/function 618 may be adapted to determine the local services and configurations of each provider in a local area, and may be further adapted to store and/or retrieve such information in and/or from the local services and configuration storage portion 628 of the memory/storage device 606. This list is non-limiting.

The memory/storage device 606 may be adapted to include service parameter list generating instructions 620, negotiation instructions 622, service parameter analysis instructions 624, and local connectivity services and configuration determining/storing/retrieving instructions 626. The memory/storage device 606 may further be adapted to include the configuration storage portion 628 for local connectivity services and configurations determined by the local connectivity services and configuration determining/storing/retrieving module/circuit/function 618. This list is non-limiting.

### Methods Operational at a Service Manager and an SCP Server

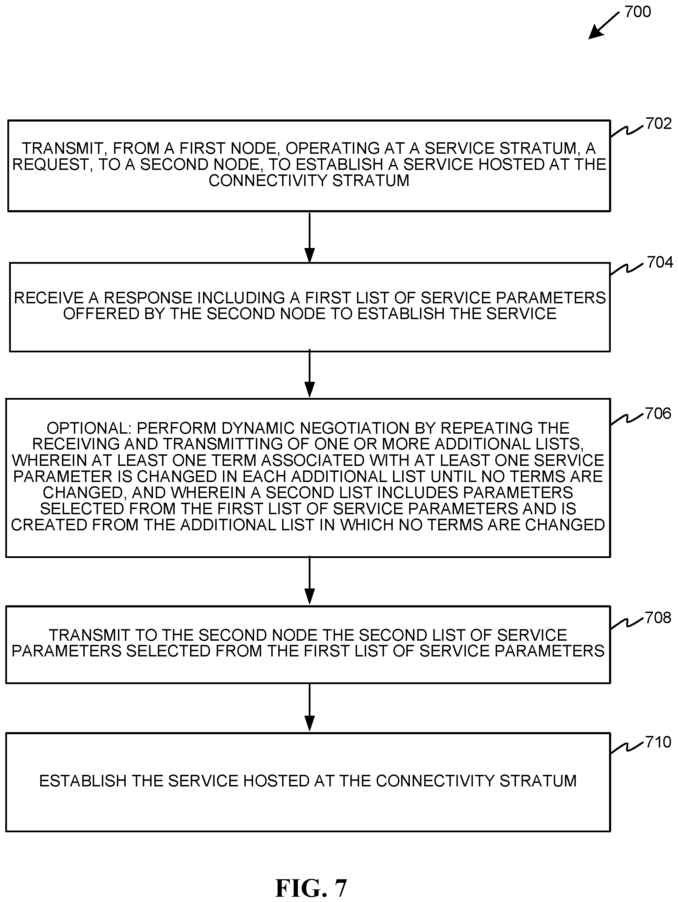

FIG. 7 is flow diagram of an exemplary method 700 of establishing a service hosted at a connectivity stratum. According to one aspect, a first node, such as a Service Manager at a service stratum, may send, from the first node, a request to a second node to establish a service hosted at the connectivity stratum 702. The second node may be operating at a connectivity stratum or an access stratum. The Service Manager may obtain a response including a first list of service parameters offered by the second node to establish the service 704.

The Service Manager may analyze the first list to determine, for example, if all parameters (or terms associated with the parameters) are acceptable. Acceptability may be based, for example, on determining if a given term of a given parameter corresponds to a predefined value established for the term. The predefined value may be a value in a predefined range of values. If the analysis determines that a parameter is out of range of a predetermined value, the Service Manager may perform dynamic negotiation by repeating the obtaining and sending of one or more additional lists, wherein at least one term associated with at least one service parameter is changed in each additional list until no terms are changed, and wherein a second list includes parameters selected from the first list of service parameters and is created from the additional list in which no terms are changed 706. According to one aspect, no terms are changed when each term on a most recently obtained list corresponds to a predefined value established for each term on the most recently obtained list.

The Service Manager may then send to the second node the second list of service parameters selected from the first list of service parameters 708. According to some aspects, the first list of service parameters and the second list of service parameters may include service parameters related to configuration of the service. The first list of service parameters may include a plurality of available terms for the service hosted at the connectivity stratum, and the second list of service parameters may include the terms for the service selected by the first node.

Finally, and by way of example if all service parameters are authorized (e.g., no change is needed to the service parameters (or terms of the service parameters) in the list either because the first list was acceptable without any need for changes or because dynamic negotiation resulted in creation of an acceptable list), the Service Manager may establish the service hosted at the connectivity stratum 710. Establishing the service may be by way of informing the connectivity stratum that the service is acceptable. Informing the connectivity stratum may be by way of sending a confirmation message to the connectivity stratum. The confirmation message may indicate that the parameters (and/or terms associated with the parameters) are acceptable to the Service Manager. According to some aspects, establishing the service may include one or more of establishing wireless access for one or more devices and performing session management for the one or more devices.

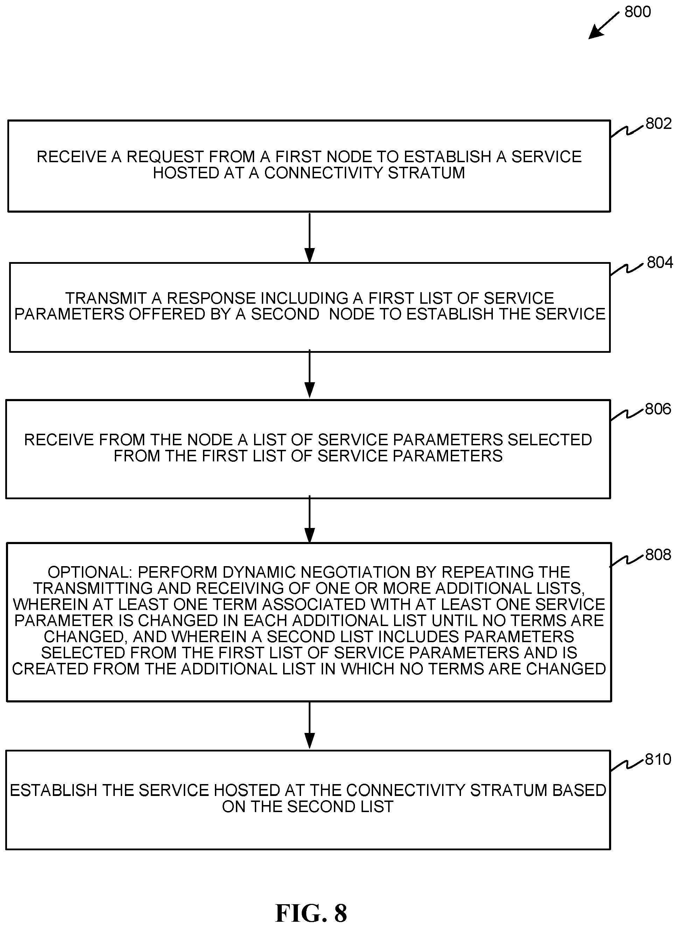

FIG. 8 is flow diagram of an exemplary method 800 of establishing a service hosted at a connectivity stratum. According to one aspect, a node at a connectivity stratum, such as an SCP Server, may obtain a request from a node operating at a service stratum, to establish a service hosted at the connectivity stratum 802. The SCP Server may send a response including a first list of service parameters offered by the node operating in the connectivity stratum to establish the service 804. The SCP Server may then obtain from the node operating at the service stratum another list of service parameters selected from the first list of service parameters 806.

The SCP Server may analyze the another list to determine, for example, if all parameters (or terms associated with the parameters) are acceptable. Acceptability may be based, for example, on determining if a given term of a given parameter corresponds to a predefined value established for the term. The predefined value may be a value in a predefined range of values. If the analysis determines that a parameter is out of range of a predetermined value, the SCP Server may perform dynamic negotiation by repeating the sending and obtaining of one or more additional lists, wherein at least one term associated with at least one service parameter is changed in each additional list until no terms are changed, and wherein a second list includes parameters selected from the first list of service parameters and is created from the additional list in which no terms are changed 808. According to one aspect, no terms are changed when each term on a most recently obtained list corresponds to a predefined value established for each term on the most recently obtained list.

According to some aspects, the first list of service parameters and the second list of service parameters may include service parameters related to configuration of the service. The first list of service parameters may include a plurality of available terms for the service hosted at the connectivity stratum, and the second list of service parameters may include the terms for the service selected by the first node.

Finally, and by way of example if all service parameters are authorized (e.g., no change is needed to the service parameters (or terms of the service parameters) in the list either because the first list was acceptable without any need for changes or because dynamic negotiation resulted in creation of an acceptable list), the SCP Server may establish the service hosted at the connectivity stratum 810 based on the second list. Establishment of the service may include configuring the service at the connectivity stratum based on a negotiated list of service parameters. According to some aspects, establishing the service may include one or more of establishing wireless access for one or more devices and performing session management for the one or more devices. Additionally, the service may be removed at a later time. Removing services at the connectivity stratum may also be based on the negotiated list of service parameters.

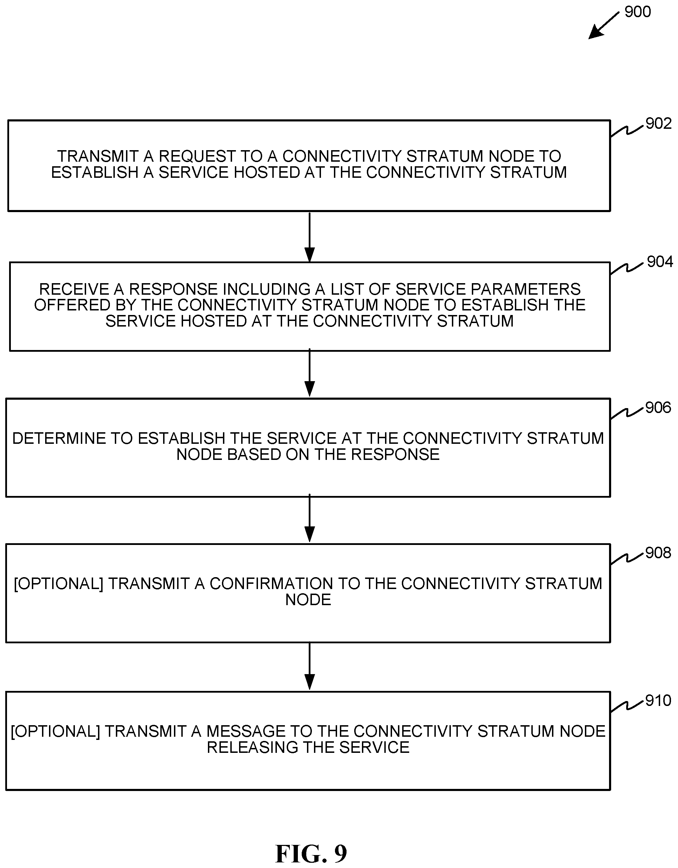

FIG. 9 is flow diagram of an exemplary method 900 of establishing a service hosted at a connectivity stratum. According to one aspect, a first node, such as a Service Manager at a service stratum, may send a request, to a second node, such as a an SCP Server at a connectivity stratum, to establish connectivity for a service hosted at the connectivity stratum 902. The Service Manager may obtain a response including a list of service parameters offered by the second node to establish the service hosted at the connectivity stratum 904. The Service Manager may then determine whether to establish the service at the connectivity stratum based on the response 906. As an optional step, (i.e., in the case where the Service Manager determines that service should be established) the Service Manager may send a confirmation to the node 908. The confirmation may confirm that the most recent response including the list of service parameters offered by the connectivity stratum node is acceptable. Later, again as an optional step, the Service Manager may send a message to the node releasing the service 910.

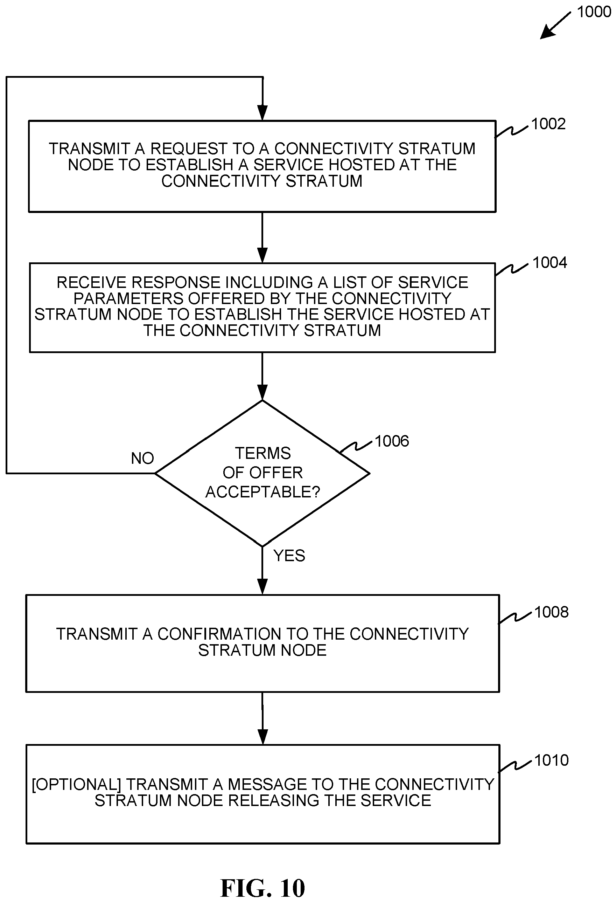

FIG. 10 is flow diagram of an exemplary method 1000 of establishing a service hosted at a connectivity stratum. According to one aspect, a first node, such as a Service Manager at a service stratum, may send a request 1002, to a second node, such as a node at a connectivity stratum, to establish a service hosted at the connectivity stratum. The Service Manager may obtain a response including a list of service parameters offered by the node to establish the service hosted at the connectivity stratum 1004. The Service Manager may then make a determination as to whether the list of service parameters offered by the node represents an acceptable offer 1006. If the terms of the offer is not acceptable, the method may return to the step of sending the request 1002. If the terms of the offer are acceptable, the method may continue to the step of sending a confirmation to the node 1008. The confirmation may confirm that the most recent response including the list of service parameters offered by the connectivity stratum node is acceptable. Later, as an optional step, the Service Manager may send a message to the node releasing the service 1010.

Another aspect may include a method, including sending, by a processor at a first node, to a second node, a request to provide a service to one or more devices. Implementations may include one or more of the following features. The method where the request includes negotiable parameters associated with the service. The method where the request includes negotiable parameters and costs associated with the service. The method where the first node is at a first stratum and the second node is at a second stratum. The method where the first stratum is a service stratum and the second stratum is a connectivity stratum. The method where the service includes one or more of: wireless access for the one or more devices; and session management for the one or more devices. The method further including: obtaining a first response including a first set of terms for the service; sending a confirmation indicating acceptance of establishment of the service based on the first set of terms if an analysis of the first set of terms yields a positive result, or negotiating to converge on an nth set of terms, where n is greater than or equal to 2, if an analysis of the n-1th set of terms yields a negative result; and sending the confirmation indicating acceptance of establishment of the service based on the nth set of terms if an analysis of the nth set of terms is acceptable.

Another aspect may include a method, including sending, by a processor at a first node, to a second node, a request to provide a service to one or more devices. The request may include negotiable parameters associated with the service and may additionally or alternatively include costs associated with the service. The first node may be at a first stratum and the second node may be at a second stratum. The first stratum may be a service stratum and the second stratum may be a connectivity stratum. The service may include wireless access for the one or more devices and/or session management for the one or more devices. The method may also include obtaining a first response including a first set of terms for the service, as well as sending a confirmation indicating acceptance of the first set of terms if an analysis of the first set of terms yields a positive result, or negotiating to converge on an nth set of terms that are acceptable to both parties as the terms for service.

Still another aspect may relate to obtaining a first response including a first offered list of terms; and analyzing the first offered list of terms to determine whether to establish the service; if it is determined to establish the service: sending a confirmation indicating acceptance of first offered list of terms; and if it is determined to not establish the service: sending an nth request to the second node; obtaining an nth response including an nth offered list of terms, where n is greater than or equal to 2; analyzing the nth offered list of terms to determine whether to establish the service; and negotiating the terms by, for instance, repeating the sending and obtaining until values of terms included in the nth response converge with values of terms in a predetermined set of terms known to the processor; and sending the confirmation indicating acceptance of nth offered list of terms. In some aspects, the method each request, or transmission of a new/revised set of terms may be considered a counteroffer. In one aspect, the values of terms included in the nth response converge with values of terms in the predetermined set of terms when differences between corresponding terms are within predefined limits. In one aspect, the sending and the obtaining of lists of terms are repeated to allow service parameters and price signals to be agreed to in real time.

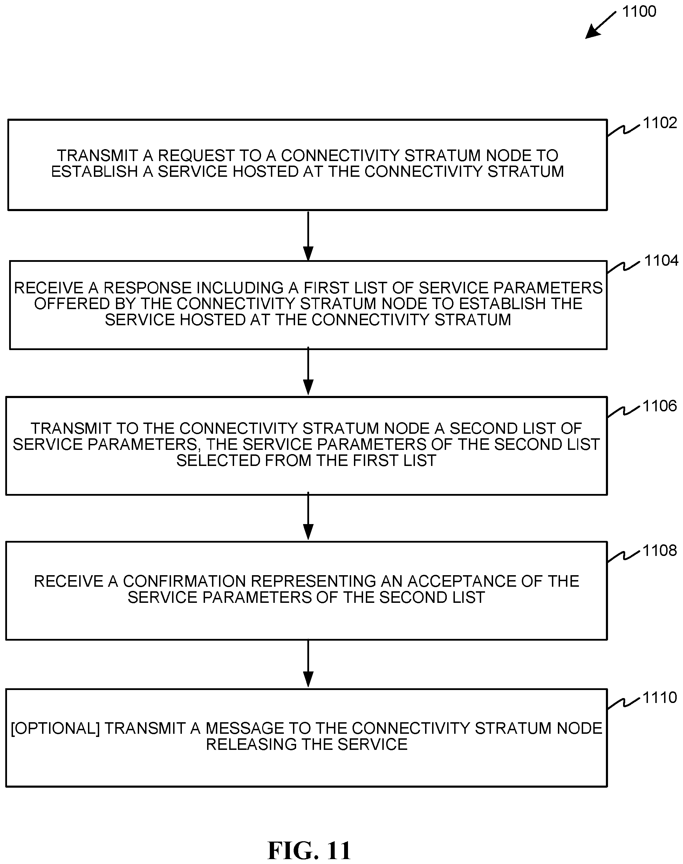

FIG. 11 is flow diagram of an exemplary method 1100 of establishing a service hosted at a connectivity stratum. According to one aspect, a first node, such as a Service Manager at a service stratum, may send a request to a second node, such as an SCP Server at a connectivity stratum, to establish connectivity for a service hosted at the connectivity stratum 1102. The Service Manager may obtain a response including a first list of service parameters offered by the node to establish the service hosted at the connectivity stratum 1104. The Service Manager may send to the SCP Server a second list of service parameters, the service parameters of the second list may be selected from the first list 1106. The Service Manager may then obtain a confirmation from the SCP Server representing an acceptance of the service parameters of the second list 1108. Later, as an optional step, the Service Manager may send a message to the node releasing the service 1110.

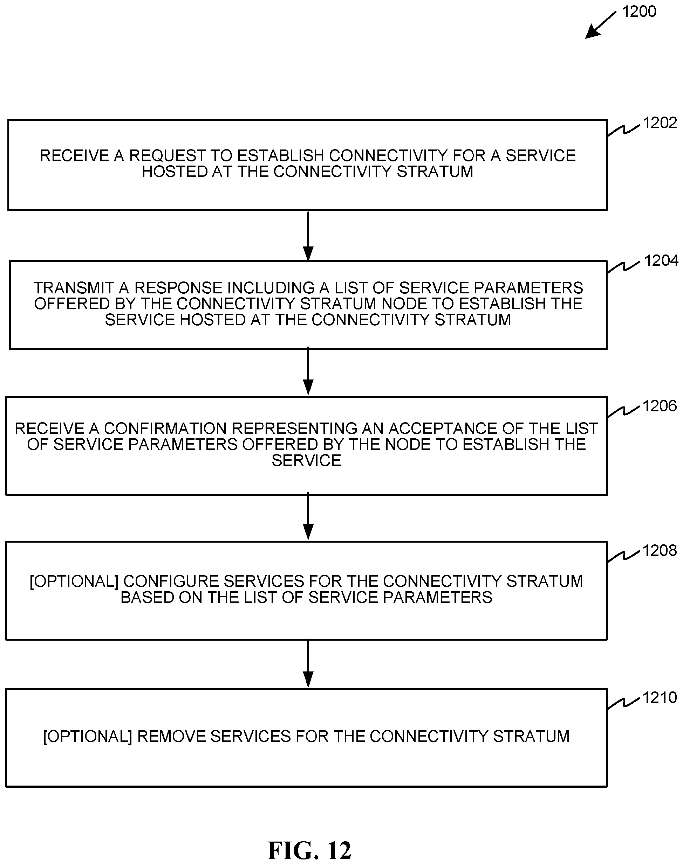

FIG. 12 is flow diagram of an exemplary method 1200 of establishing a service hosted at a connectivity stratum. According to one aspect, a node, such as an SCP server at a connectivity stratum, may obtain a request to establish connectivity for a service hosted at the connectivity stratum 1202. The SCP server may send a response including a list of service parameters offered by the node to establish the service hosted at the connectivity stratum 1204. The SCP server may then obtain a confirmation from a Service Manager, where the confirmation may represent the Service Manager's acceptance of the list of service parameters offered by the node to establish the service 1206. As an optional step (e.g., if the Service Manager accepted the offer), the SCP server may configure 1208 services at the connectivity stratum based on the list of service parameters by, for example, pushing the configuration to elements of the connectivity stratum (e.g., MME, PGW, SGW). Later, as an optional step that may be taken, for example if the SCP server obtains a message indicating withdrawal of the Service Manager from the service, the SCP server may remove 1210 the service at the connectivity stratum based on the list of service parameters, or on a Service ID, or some other identifier of the service.

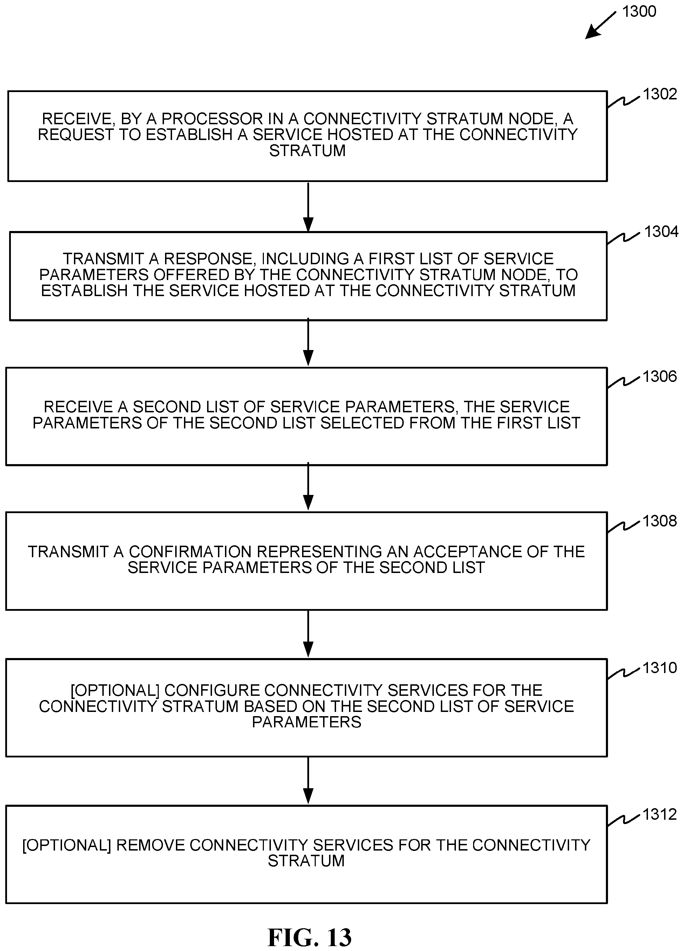

FIG. 13 is flow diagram of an exemplary method 1300 of establishing a service hosted at a connectivity stratum. According to one aspect, a node such as an SCP server at a connectivity stratum may obtain a request to establish a service hosted at a connectivity stratum 1302. The SCP server may send a response including a first list of service parameters offered by the node to establish the service hosted at the connectivity stratum 1304. The SCP server may then obtain a second list of service parameters, the service parameters of the second list selected from the first list 1306. If the second list of service parameters is acceptable, the SCP server may send a confirmation representing an acceptance of the service parameters of the second list 1308. As an optional step (e.g., if the Service Manager accepted the offer), the SCP server may configure 1310 connectivity services at the connectivity stratum based on the list of service parameters by, for example, pushing the configuration to elements of the connectivity stratum (e.g., MME, PGW, SGW). Later, as an optional step that may be taken, for example if the SCP server obtains a message indicating withdrawal of the Service Manager from the service, the SCP server may remove 1210 the service at the connectivity stratum based on the list of service parameters, or on a Service ID, or some other identifier of the service.

Specific implementations shown and described are only examples and should not be construed as the only way to implement the present disclosure unless specified otherwise herein. It is readily apparent to one of ordinary skill in the art that the various examples in the present disclosure may be practiced by numerous other partitioning solutions.

One or more of the components, acts, features and/or functions described herein and illustrated in the drawings may be rearranged and/or combined into a single component, act, feature, or function or embodied in several components, acts, features, or functions. Additional elements, components, acts, and/or functions may also be added without departing from the invention. The algorithms described herein may also be efficiently implemented in software and/or embedded in hardware.

In the description, elements, module/circuit/functions, and functions may be shown in block diagram form in order not to obscure the present disclosure in unnecessary detail. Conversely, specific implementations shown and described are exemplary only and should not be construed as the only way to implement the present disclosure unless specified otherwise herein. Additionally, block definitions and partitioning of logic between various blocks is exemplary of a specific implementation. It is readily apparent to one of ordinary skill in the art that the present disclosure may be practiced by numerous other partitioning solutions. For the most part, details concerning timing considerations and the like have been omitted where such details are not necessary to obtain a complete understanding of the present disclosure and are within the abilities of persons of ordinary skill in the relevant art.

In addition, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

Those of ordinary skill in the art would understand that information and signals may be represented using any of a variety of different technologies and techniques. For example, data, instructions, commands, information, signals, bits, symbols, and chips that may be referenced throughout this description may be represented by voltages, currents, electromagnetic waves, magnetic fields or particles, optical fields or particles, or any combination thereof. Some drawings may illustrate signals as a single signal for clarity of presentation and description. It will be understood by a person of ordinary skill in the art that the signal may represent a bus of signals, wherein the bus may have a variety of bit widths and the present disclosure may be implemented on any number of data signals, including a single data signal.

It should be understood that any reference to an element herein using a designation such as "first," "second," and so forth does not limit the quantity or order of those elements, unless such limitation is explicitly stated. Rather, these designations may be used herein as a convenient method of distinguishing between two or more elements or instances of an element. Thus, a reference to first and second elements does not mean that only two elements may be employed there or that the first element must precede the second element in some manner. In addition, unless stated otherwise, a set of elements may comprise one or more elements.

Moreover, a storage medium may represent one or more devices for storing data, including read-only memory (ROM), random access memory (RAM), magnetic disk storage mediums, optical storage mediums, flash memory devices and/or other machine-readable mediums and, processor-readable mediums, and/or computer-readable mediums for storing information. The terms "machine-readable medium," "computer-readable medium," and/or "processor-readable medium" may include, but are not limited to non-transitory mediums such as portable or fixed storage devices, optical storage devices, and various other mediums capable of storing, containing, or carrying instruction(s) and/or data. Thus, the various methods described herein may be fully or partially implemented by instructions and/or data that may be stored in a "machine-readable medium," "computer-readable medium," and/or "processor-readable medium" and executed by one or more processors, machines and/or devices.

Furthermore, embodiments may be implemented by hardware, software, firmware, middleware, microcode, or any combination thereof. When implemented in software, firmware, middleware, or microcode, the program code or code segments to perform the necessary tasks may be stored in a machine-readable medium such as a storage medium or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing, obtaining, and/or receiving information, data, arguments, parameters, or memory contents. Information, arguments, parameters, data, etc. may be passed, forwarded, sent, or transmitted via any suitable means including memory sharing, message passing, token passing, network transmission, etc.

The various illustrative logical blocks, modules, module/circuit/functions, elements, and/or components described in connection with the examples disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing components, e.g., a combination of a DSP and a microprocessor, a number of microprocessors, one or more microprocessors in conjunction with a DSP core, or any other such configuration. A general-purpose processor, configured for executing embodiments described herein, is considered a special purpose processor for carrying out such embodiments. Similarly, a general-purpose computer is considered a special purpose computer when configured for carrying out embodiments described herein.

The methods or algorithms described in connection with the examples disclosed herein may be embodied directly in hardware, in a software module executable by a processor, or in a combination of both, in the form of processing unit, programming instructions, or other directions, and may be contained in a single device or distributed across multiple devices. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor.

Those of skill in the art would further appreciate that the various illustrative logical blocks, modules, module/circuit/functions, and algorithm steps described in connection with the embodiments disclosed herein may be implemented as electronic hardware, computer software, or combinations of both. To clearly illustrate this interchangeability of hardware and software, various illustrative components, blocks, modules, module/circuit/functions, and steps have been described above generally in terms of their functionality. Whether such functionality is implemented as hardware, software, or a combination thereof depends upon the particular application and design selections imposed on the overall system.

The various features of the invention described herein can be implemented in different systems without departing from the invention. It should be noted that the foregoing embodiments are merely examples and are not to be construed as limiting the invention. The description of the embodiments is intended to be illustrative, and not to limit the scope of the claims. As such, the present teachings can be readily applied to other types of apparatuses and many alternatives, modifications, and variations will be apparent to those skilled in the art.

## Claims

1. A method, operational at a first node operating at a service stratum (102), comprising:
sending (1102) a request, to a second node operating at a connectivity stratum (104), to establish a service hosted at the connectivity stratum (104), wherein the service is a wireless service and the connectivity stratum (104) provides communications between the service stratum (102) and user devices (108) operating at an access stratum (106);
obtaining (1104) from the second node, a response including a first list of service parameters offered by the second node to establish the service;
sending (1106) to the second node, a second list of service parameters selected from the first list of service parameters, wherein the first list of service parameters and the second list of service parameters include service parameters related to configuration of the service, and wherein the service parameters are at least used to establish flow filters and packet forwarding rules;
receiving (1108) from the second node, a confirmation representing an acceptance of the service parameters of the second list; and
transmitting (1110) a message to the second node releasing the service hosted at the connectivity stratum.

2. The method of claim 1, wherein the service is at least one of a connectivity service, a content delivery service, a storage service, an analytic service, a billing service, mobile virtual network operator, MVNO, service, a voice service, and a text service.

3. The method of claim 1, further comprising:
performing dynamic negotiation by repeating the obtaining and sending of one or more additional lists before sending the second list, wherein at least one term associated with at least one service parameter is changed in each additional list until no terms are changed, and wherein the second list is comprised of the additional list in which no terms are changed.

4. The method of claim 3, wherein no terms are changed when each term on a most recently obtained list corresponds to a predefined value established for each term on the most recently obtained list.

5. The method of claim 4, wherein the predefined value is a value in a predefined range of values.

6. A device, comprising means for performing the steps of any claim 1-5.

7. A method, operational at a second node operating at a connectivity stratum (104), comprising:
obtaining (1302) a request from a first node operating at a service stratum (102) to establish a service hosted at the connectivity stratum (104), wherein the service is a wireless service and the connectivity stratum (104) provides communications between the service stratum (102) and user devices (108) operating at an access stratum (106);
sending (1304) to the first node, a response including a first list of service parameters offered by the second node to establish the service;
obtaining (1306) from the first node, a second list of service parameters selected from the first list of service parameters, wherein the first list of service parameters and the second list of service parameters include service parameters related to configuration of the service, and wherein the service parameters are at least used to establish flow filters and packet forwarding rules;
transmitting (1308) to the first node, a confirmation representing an acceptance of the service parameters of the second list; and
configuring (1310) the service hosted at the connectivity stratum (104) based on the second list.

8. The method of claim 7, wherein the service is at least one of a connectivity service, a content delivery service, a storage service, an analytic service, a billing service, a mobile virtual network operator, MVNO, service, a voice service, and a text service.

9. The method of claim 7, further comprising:
performing dynamic negotiation by repeating the obtaining and sending of one or more additional lists before sending the second list, wherein at least one term associated with at least one service parameter is changed in each additional list until no terms are changed, and wherein the second list is comprised of the additional list in which no terms are changed.

10. The method of claim 9, wherein no terms are changed when each term on a most recently obtained list corresponds to a predefined value established for each term on the most recently obtained list.

11. The method of claim 10, wherein the predefined value is a value in a predefined range of values.

12. A device, comprising means for performing the steps of any claim 7-11.

13. A computer program, comprising instructions for implementing any method of claims 1-5 or 7-11.

## Patentansprüche

1. Ein Verfahren zum Betrieb an einem ersten Knoten, der in einem Dienst-Stratum (102) arbeitet, umfassend:
Senden (1102) einer Anfrage an einen zweiten Knoten, der in einem Konnektivitäts-Stratum (104) arbeitet, um einen Dienst einzurichten, der in dem Konnektivitäts-Stratum (104) gehostet wird, wobei der Dienst ein drahtloser Dienst ist und das Konnektivitäts-Stratum (104) Kommunikationen zwischen dem Dienst-Stratum (102) und Benutzergeräten (108) bereitstellt, die in einem Zugriffs-Stratum (106) arbeiten;
Erhalten (1104) von dem zweiten Knoten, einer Antwort einschließlich einer ersten Liste von Dienstparametern, die von dem zweiten Knoten angeboten werden, um den Dienst einzurichten;
Senden (1106) an den zweiten Knoten, einer zweiten Liste von Dienstparametern, die aus der ersten Liste von Dienstparametern ausgewählt ist, wobei die erste Liste von Dienstparametern und die zweite Liste von Dienstparametern Dienstparameter enthalten, die sich auf Konfiguration des Dienstes beziehen, und wobei die Dienstparameter zumindest verwendet werden, um Flow-Filter und Paketweiterleitungsregeln einzurichten;
Empfangen (1108) von dem zweiten Knoten, einer Bestätigung betreffend eine Akzeptanz der Dienstparameter der zweiten Liste; und
Übertragen (1110) einer Nachricht an den zweiten Knoten, die den in einem Konnektivitäts-Stratum gehosteten Dienst freigibt.

2. Das Verfahren nach Anspruch 1, wobei der Dienst mindestens einer von einem Konnektivitätsdienst, einem Inhaltsbereitstellungsdienst, einem Speicherdienst, einem Analytikdienst, einem Abrechnungsdienst, einem Betreiber eines mobilen virtuellen Netzwerks, MVNO, -Dienst, einem Sprachdienst und einem Textdienst ist.

3. Das Verfahren nach Anspruch 1, weiter umfassend:
Durchführen einer dynamischen Verhandlung durch Wiederholen des Erhaltens und Sendens einer oder mehrerer zusätzlicher Listen vor Senden der zweiten Liste, wobei mindestens ein Begriff, der mit mindestens einem Dienstparameter assoziiert ist, in jeder zusätzlichen Liste geändert wird, bis keine Begriffe geändert werden, und wobei die zweite Liste von der zusätzlichen Liste gebildet wird, in der keine Begriffe geändert werden.

4. Das Verfahren nach Anspruch 3, wobei keine Begriffe geändert werden, wenn jeder Begriff auf einer zuletzt erhaltenen Liste einem vordefinierten Wert entspricht, der für jeden Begriff auf der zuletzt erhaltenen Liste festgelegt wurde.

5. Das Verfahren nach Anspruch 4, wobei der vordefinierte Wert ein Wert in einem vordefinierten Wertebereich ist.

6. Eine Vorrichtung, aufweisend Mittel zum Ausführen der Schritte eines beliebigen Anspruchs 1-5.

7. Ein Verfahren zum Betrieb an einem zweiten Knoten, der in einem Konnektivitäts-Stratum (104) arbeitet, umfassend:
Erhalten (1302) einer Anfrage von einem ersten Knoten, der in einem Dienst-Stratum (102) arbeitet, um einen Dienst einzurichten, der in dem Konnektivitäts-Stratum (104) gehostet wird, wobei der Dienst ein drahtloser Dienst ist und das Konnektivitäts-Stratum (104) Kommunikationen zwischen dem Dienst-Stratum (102) und Benutzergeräten (108) bereitstellt, die in einem Zugriffs-Stratum (106) arbeiten;
Senden (1304) an den ersten Knoten, einer Antwort mit einer ersten Liste von Dienstparametern, die von dem zweiten Knoten angeboten werden, um den Dienst einzurichten;
Erhalten (1306) von dem ersten Knoten, einer zweiten Liste von Dienstparametern, die aus der ersten Liste von Dienstparametern ausgewählt ist, wobei die erste Liste von Dienstparametern und die zweite Liste von Dienstparametern Dienstparameter enthalten, die sich auf Konfiguration des Dienstes beziehen, und wobei die Dienstparameter zumindest verwendet werden, um Flow-Filter und Paketweiterleitungsregeln einzurichten;
Übertragen (1308) an den ersten Knoten, einer Bestätigung betreffend eine Akzeptanz der Dienstparameter der zweiten Liste; und
Konfigurieren (1310) des in dem Konnektivitäts-Stratum (104) gehosteten Dienstes basierend auf der zweiten Liste.

8. Das Verfahren nach Anspruch 7, wobei der Dienst mindestens einer von einem Konnektivitätsdienst, einem Inhaltsbereitstellungsdienst, einem Speicherdienst, einem Analytikdienst, einem Abrechnungsdienst, einem Betreiber eines mobilen virtuellen Netzwerks, MVNO, -Dienst, einem Sprachdienst und einem Textdienst ist.

9. Das Verfahren nach Anspruch 7, weiter umfassend:
Durchführen einer dynamischen Verhandlung durch Wiederholen des Erhaltens und Sendens einer oder mehrerer zusätzlicher Listen vor dem Senden der zweiten Liste, wobei mindestens ein Begriff, der mit mindestens einem Dienstparameter assoziiert ist, in jeder zusätzlichen Liste geändert wird, bis keine Begriffe geändert werden, und wobei die zweite Liste von der zusätzlichen Liste gebildet wird, in der keine Begriffe geändert werden.

10. Das Verfahren nach Anspruch 9, wobei keine Begriffe geändert werden, wenn jeder Begriff auf einer zuletzt erhaltenen Liste einem vordefinierten Wert entspricht, der für jeden Begriff auf der zuletzt erhaltenen Liste festgelegt wurde.

11. Das Verfahren nach Anspruch 10, wobei der vordefinierte Wert ein Wert in einem vordefinierten Wertebereich ist.

12. Eine Vorrichtung, aufweisend Mittel zum Ausführen der Schritte eines beliebigen Anspruchs 7-11.

13. Ein Computerprogramm, umfassend Instruktionen zum Ausführen eines beliebigen Verfahrens nach den Ansprüchen 1-5 oder 7-11.

## Revendications

1. Un procédé, opérationnel sur un premier nœud opérant sur une strate de service (102), comprenant :
l'envoi (1102), à un second nœud opérant sur une strate de connectivité (104), d'une requête pour établir un service hébergé sur la strate de connectivité (104), dans lequel le service est un service sans fil et la strate de connectivité (104) assure des communications entre la strate de service (102) et des dispositifs utilisateurs (108) opérant sur une strate d'accès (106) ;
l'obtention (1104), du second nœud, d'une réponse incluant une première liste de paramètres de service proposés par le second nœud pour établir le service ;
l'envoi (1106), au second nœud, d'une deuxième liste de paramètres de service sélectionnés parmi la première liste de paramètres de service, dans lequel la première liste de paramètres de service et la deuxième liste de paramètres de service incluent des paramètres de service relatifs à la configuration du service, et dans lequel les paramètres de service sont utilisés au moins pour établir des filtres de flux et des règles de transfert des paquets ;
la réception (1108), depuis le second nœud, d'une confirmation représentant une acceptation des paramètres de service de la deuxième liste ; et
la transmission (1110) au second nœud d'un message libérant le service hébergé sur la strate de connectivité.

2. Le procédé selon la revendication 1, dans lequel le service est au moins l'un d'entre un service de connectivité, un service de distribution de contenu, un service de stockage, un service analytique, un service de facturation, un service d'opérateur de réseau virtuel mobile, MVNO, un service vocal et un service texte.

3. Le procédé selon la revendication 1, comprenant en outre :
la réalisation d'une négociation dynamique par répétition de l'obtention et de l'envoi d'une ou plusieurs listes supplémentaires avant envoi de la deuxième liste, dans lequel au moins un terme associé à au moins un paramètre de service est changé dans chaque liste supplémentaire jusqu'à ce qu'aucun terme ne soit changé, et dans lequel la deuxième liste se compose de la liste supplémentaire dans laquelle aucun terme n'est changé.

4. Le procédé selon la revendication 3, dans lequel aucun terme n'est changé lorsque chaque terme d'une liste la plus récemment obtenue correspond à une valeur prédéfinie établie pour chaque terme de la liste la plus récemment obtenue.

5. Le procédé selon la revendication 4, dans lequel la valeur prédéfinie est une valeur dans une plage prédéfinie de valeurs.

6. Un dispositif, comprenant des moyens pour réaliser les étapes selon l'une des revendications 1 à 5.

7. Un procédé, opérationnel sur un second nœud opérant sur une strate de connectivité (104), comprenant :
l'obtention (1302), d'un premier nœud opérant sur une strate de service (102), d'une requête pour établir un service hébergé sur la strate de connectivité (104), dans lequel le service est un service sans fil et la strate de connectivité (104) assure des communications entre la strate de service (102) et des dispositifs utilisateurs (108) opérant sur une strate d'accès (106) ;
l'envoi (1304), au premier nœud, d'une réponse incluant une première liste de paramètres de service proposés par le second nœud pour établir le service ;
l'obtention (1306), du premier nœud, d'une deuxième liste de paramètres de service sélectionnés parmi la première liste de paramètres de service, dans lequel la première liste de paramètres de service et la deuxième liste de paramètres de service incluent des paramètres de service relatifs à une configuration du service, et dans lequel les paramètres de service sont au moins utilisés pour établir des filtres de flux et des règles de transfert de paquets ;
la transmission (1308), au premier nœud, d'une confirmation représentant une acceptation des paramètres de service de la deuxième liste ; et
la configuration (1310) du service hébergé sur la strate de connectivité (104) sur la base de la deuxième liste.

8. Le procédé selon la revendication 7, dans lequel le service est au moins l'un d'entre un service de connectivité, un service de distribution de contenu, un service de stockage, un service analytique, un service de facturation, un service d'opérateur de réseau virtuel mobile, MVNO, un service vocal et un service texte.

9. Le procédé selon la revendication 7, comprenant en outre :
la réalisation d'une négociation dynamique par répétition de l'obtention et de l'envoi d'une ou plusieurs listes supplémentaires avant l'envoi de la deuxième liste, dans lequel au moins un terme associé à au moins un paramètre de service est changé dans chaque liste supplémentaire jusqu'à ce qu'aucun terme ne soit changé, et dans lequel la deuxième liste se compose de la liste supplémentaire dans laquelle aucun terme n'est changé.

10. Le procédé selon la revendication 9, dans lequel aucun terme n'est changé lorsque chaque terme d'une liste la plus récemment obtenue correspond à une valeur prédéfinie établie pour chaque terme de la liste la plus récemment obtenue.

11. Le procédé selon la revendication 10, dans lequel la valeur prédéfinie est une valeur dans une plage prédéfinie de valeurs.

12. Un dispositif, comprenant des moyens pour réaliser les étapes selon l'une des revendications 7 à 11.

13. Un programme informatique, comprenant des instructions pour mettre en œuvre tout procédé selon les revendications 1 à 5 ou 7 à 11.
